# EUROPEAN PATENT SPECIFICATION

(11) **EP 3 070 393 B1**
(45) Date of publication and mention of the grant of the patent: **01.08.2018**
(21) Application number: 16157501.4
(22) Date of filing: 26.02.2016
(51) Int. Cl.: F17C 13/08

(54) **GAS CYLINDER**
GASZYLINDER
BOUTEILLE DE GAZ

(30) Priority: 17.03.2015 IT MI20150062 U
(43) Date of publication of application: 21.09.2016
(73) Proprietor: Faber Industrie S.p.A., 33043 Cividale Del Friuli (UD) (IT)
(72) Inventor: COLA, Gian Luigi, 33043 Cividale del Friuli Udine (IT)
(74) Representative: Leihkauf, Steffen Falk

(56) References cited:
- WO-A1-2015/084170
- WO-A2-2012/174628
- DE-A1-102011 051 494
- US-A1- 2004 016 855

## Description

The present invention relates to a gas cylinder, i.e. a transportable container used for storing pressurized gas and having a foot for facilitating the stable resting of the cylinder on a surface, e.g. a shelf or a floor. DE102011051494A1 describes a closest state of the art gas cylinder with protective ring.

The cylinders are intended for a variety of uses and the standards for their construction and testing vary according to the application. The main applications of gas cylinders may include storage of liquefied or compressed gases for automotive applications, domestic or industrial uses, storage of compressed or liquefied gases for industrial use, plenum tanks for compressed air, storage of breathable mixtures for breathing apparatuses, storage of medicinal gas, and fire extinguishers.

The known gas cylinders have a cylindrical body with an either concave or convex base and an either semispherical or elliptical nose, and a closing valve arranged on the upper part of the cylinder.

Because of their bulging shape, the gas cylinders are often provided with a foot portion which facilitates the resting thereof.

This foot usually consists of an annular or cylindrical portion made of steel welded to the cylinder body and forming a lower "blade-like" annular resting surface, often with sharp edges.

During transportation and use, the gas cylinders are often dragged, rested and moved, whereby the steel foot portion scratches and damages the resting surface underneath or causes injury to the people using the gas cylinder.

Furthermore, when moving the gas cylinders, the knocks and frictions between the foot and the surfaces underneath also result in a deterioration of the outer lining of the cylinder itself.

It is thus the object of the present invention to provide a gas cylinder having features so as to avoid the drawbacks mentioned with reference to the prior art.

These and other objects are achieved by means of a gas cylinder as defined by claim 1.

The protection ring allows to transport and use the gas cylinder without damaging the surfaces underneath, without damaging the outer lining of the cylinder itself, and without risk of injury for users.

In order to better understand the invention and appreciate the advantages thereof, some non-limitative exemplary embodiments will be described below with reference to the drawings, in which:
figure 1 is a side view of a gas cylinder according to an embodiment of the invention;
figure 2 is a bottom perspective view of the gas cylinder in figure 1;
figure 3 is a partial bottom perspective view of the cylinder in figure 1 with a protection ring removed from the cylinder body;
figure 4 is a perspective view of a protection ring of a cylinder according to an embodiment;
figure 5 is a top view of the protection ring in figure 4;
figure 6 is a bottom view of the protection ring in figure 4;
figure 7 is a side view of the protection ring in figure 4;
figure 8 is a bottom view of a protection ring made of metal material with a smoothed, rounded resting surface according to an embodiment;
figure 9 is an enlarged view of detail IX in figure 4;
figure 10 is an enlarged view of detail X in figure 5;
figures 11, 12 and 14 are partial sectional views of details of the gas cylinder according to embodiments;
figure 13 indicates some geometric references of the gas cylinder according to the invention.

With reference to the figures, a gas cylinder (hereinafter referred to as "cylinder") is indicated by reference numeral 1 as a whole. Cylinder 1 comprises a cylinder body 2 internally defining a gas storage space 3, which can be closed by means of a closing valve (not shown in the figures). The cylinder body 2 comprises a tubular wall 5, preferably substantially cylindrical and extending along a longitudinal axis L of cylinder 1, a bottom wall 6, e.g. shaped as a spherical or elliptical cap, which is connected to a lower end of the tubular wall 5 and delimits the gas storage space 3 on a lower side 7 of cylinder 1, as well as an upper wall 8, e.g. ogive-shaped, which is connected to an upper edge of the tubular wall 5 and delimits the gas storage space 3 on an upper side 9 of cylinder 1 opposite to the lower side 7. Cylinder 1 further comprises a threaded tubular boss 10, formed on the cylinder body 2 so as to accommodate (by screwing) the closing valve in communication with the gas storage space 3.

Cylinder 1 further comprises a lower support part 11 (so-called "foot"), preferably made of steel, connected to the lower wall 6 and having at least one or more resting portions 12 protruding towards the outside of the gas cylinder 1, in particular towards the lower side 7.

According to an aspect of the invention, cylinder 1 further comprises a protection ring 13 manufactured separately and then mounted to the supporting part 11 and having an annular slot 14 which accommodates said one or more resting portions 12, and one or more resting surfaces 15 turned or facing towards the lower side 7 and free from metal edges for a scratch-free resting of the gas cylinder 1.

The protection ring 13 allows to transport and use the gas cylinder 1 without damaging the surfaces underneath, without damaging the outer lining of the cylinder itself, and without risk of injury for users.

According to an embodiment, the resting portion 12 is a substantially cylindrical, circular, tubular or annular portion with a lower annular, flat surface 16, which is completely accommodated within the annular slot 14 of the protection ring 13. The entire support part 11 advantageously consists of a circular, cylindrical tubular portion.

The supporting part 11 may be integrally in one piece with or connected to the cylinder body 2 by welding or press-fitting or gluing.

The supporting part is made of metal, preferably of steel. Special embodiments may contemplate making the supporting part 11 of plastic or ceramic material.

The cylinder body 2 is made of metal, preferably of steel, or fiber-reinforced composite material.

The protection ring 13 may be made of plastic, polymeric or elastomeric material. In this case, the plastic or elastic yielding and the relative softness of the protection ring 13 obviate the problem of scratching on the resting surfaces and reduces the risk of injury for the user.

Alternatively, the protection ring 13 may be made of metal, e.g. stainless steel or aluminum, preferably with the smoothed, e.g. polished, resting surface 15 and with rounded and smoothed or rayed lower outer edges 16. If the protection ring 13 has a "U"-shaped profile, the lower outer edges 16 mean the outer side edges of the base of the "U".

The protection ring 13 (made of metal or plastic) may be press-fitted or friction-fitted on the resting portion 12 using the elasticity of the protection ring 13 as fastening force. In an embodiment, the protection ring 13 forms one or more rims 25 or teeth (or recesses) which engage one or more corresponding rims or teeth (or recesses) of the upper part 11, thus forming extraction-prevention means of the protection ring 13.

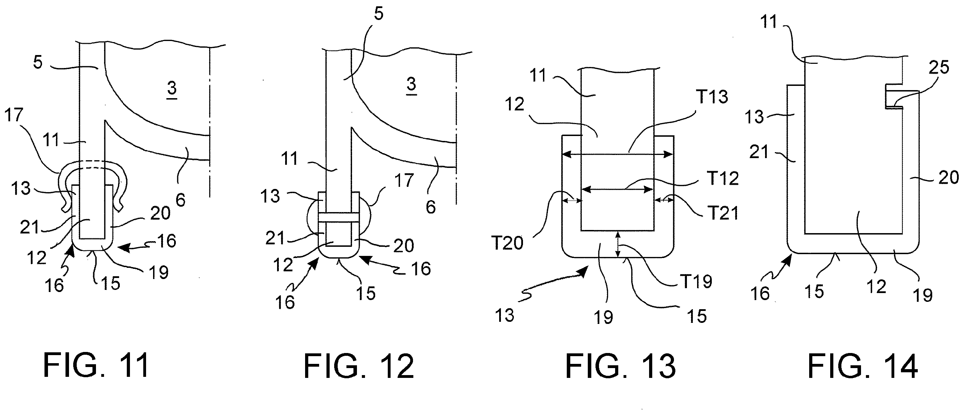

Alternatively or in addition to the elastic fastening, the protection ring 13 (made of metal or plastic) may be locked onto the resting portion 12 by means of auxiliary mechanical connection members 17 different from the protection ring 11 and from the resting portion 12, e.g. clamping springs, rivets, screws (Figs. 11, 12). This reduces the risk of the fastening ring 13 being pulled out from the supporting part 10, e.g. when dragging cylinder 1 along a floor.

Alternatively or in addition to the elastic fastening and/or the mechanical connection members 17, the protection ring 13 (made of metal or plastic) may be locked onto the resting portion 12 by means of gluing, in particular by means of gluing inside the annular slot 14.

In an advantageous embodiment, the adhesive for gluing the protection ring 13 is chosen from epoxy adhesives, e.g. mono- or bi-component, possibly with hot or induction curing.

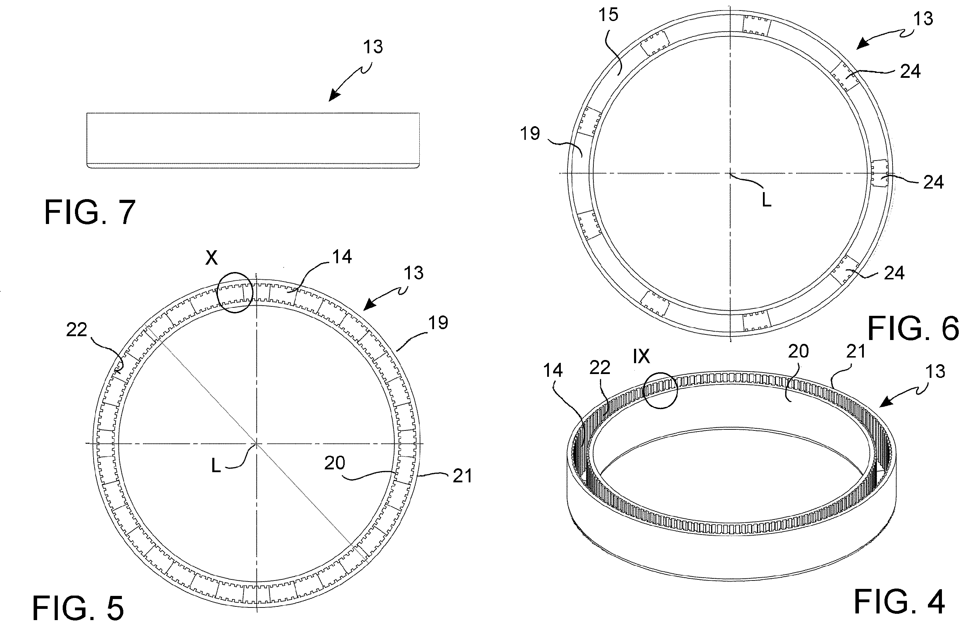

The protection ring 13 has a circular shape and a "U-shaped" section profile (on a radial section plane with respect to the longitudinal axis L) with a base wall 19, which forms the resting surface 15, and two side walls 20, 21 (radially inner wall 20, radially outer wall 21, see figures 4, 5), possibly perpendicular to the base wall 19, where at least one of, but preferably both, side walls 20, 21 form a grooved, knurled, undulated or corrugated inner surface 22, preferably with grooves or slots 23 (alternating with ribs) extending from the bottom of the annular slot 14 to its opening facing the cylinder body 1.

The grooves 23 allow a uniform distribution of the glue and its programmed movement out of the slot 14 when inserting the protection ring 13 over the support part 11.

Furthermore, the grooves 23 and the ribs increase the friction between the protection ring 13 and the supporting part 11, also in case of press-fitting.

Using a glue, the grooves 23 form local resting points for the cured glue, thus forming rotation-prevention and extraction-prevention means of the protection ring 13.

Finally, in the absence of glue or in case of partial gluing, the grooves 23 form condensate evacuation and ventilation channels which reduce the risk of interstitial corrosion of the supporting part 11 and/or of the protection ring 13.

The depth T23 of the grooves 23 and, similarly, the height of the ribs is less than 0.15*T13, preferably from 0.125*T13 to 0.085*T13, where T13 is the total radial thickness of the protection ring 13.

At least three, preferably at least four of said grooves 23 per circumferential length unit equal to the total radial thickness T13 of the protection ring 13 are preferably formed in the inner surface 22 in circumferential direction of the protection ring 13.

The grooves 23 advantageously extend parallel to the longitudinal axis L.

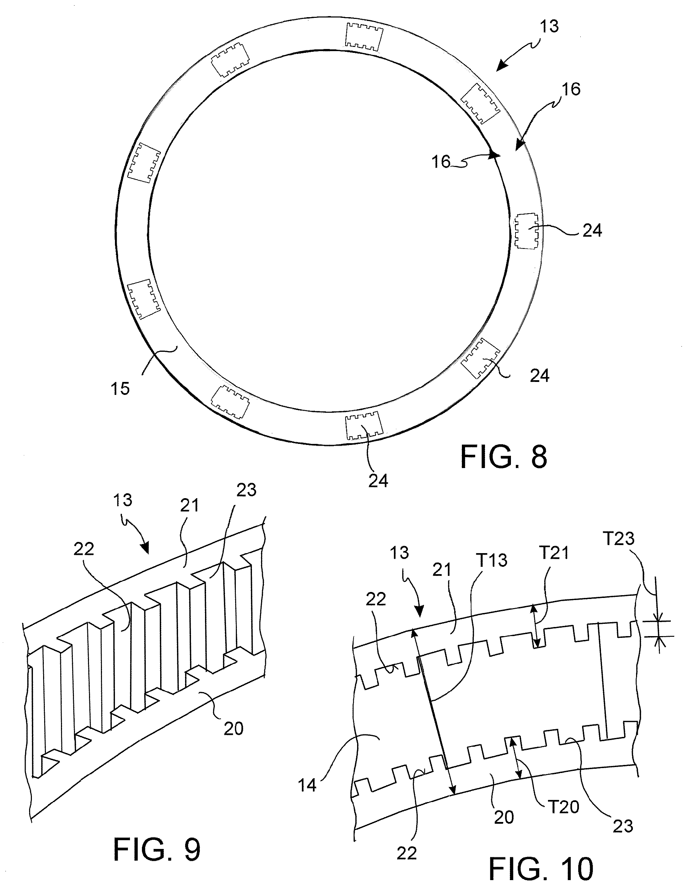

In a preferred embodiment, the protection ring 13 forms one or more through openings 24 from the resting surface 15 to the slot 14 (figures 6, 8). These through openings allow, in the case of gluing, to remove the glue in excess and in general to drain the condensate and to visually check the complete insertion of the protection ring 13 on the foot of cylinder 1. The through openings 24 are formed in the bottom wall 19 and distributed uniformly along the circumference of the protection ring 13. However, in order to reduce the exposure of the resting portion 12 as much as possible, the overall opening area Σ A24 of all through openings 24 is less than one third, preferably less than one fourth, of the total area A15 of the resting surface 15.

In an advantageous embodiment, the radial thickness T12 of the tubular wall of the resting portion 12 is greater than the thickness T19 of the bottom wall 19 of the protection ring 13. With further advantage, the radial thickness T12 of the tubular wall of the resting portion 12 is equal to or greater than the single radial thicknesses T20, T21 of the two side walls 20, 21 of the protection ring 13.

Thereby, the support part 11 reinforces and stabilizes the shape, including the outer shape, of the protection ring 13 and of its resting surface 15, despite the relative softness or yielding of the material of the protection ring 13.

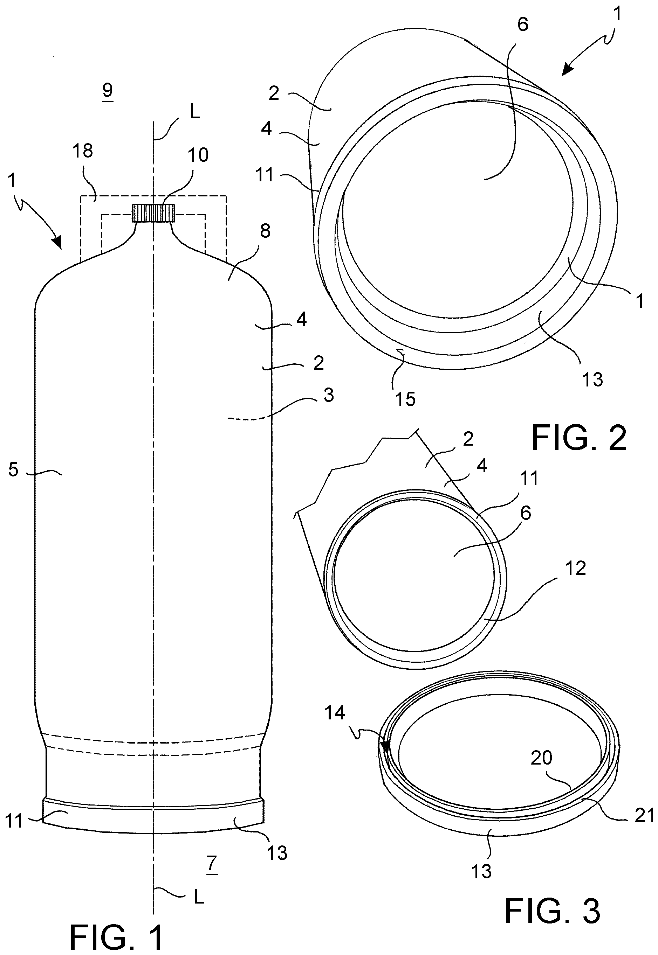

As known and shown in figure 1, the gas cylinder 1 may have a handle 18 connected to the cylinder body 2 and arranged on the upper side 9 (side of boss 10) of cylinder 1.

Obviously, those skilled in the art may make further changes and variants to the gas cylinder according to the present invention, all without departing from the scope of protection of the invention as defined in the following claims, in order to meet contingent and specific needs.

## Claims

1. A gas cylinder (1) comprising a cylinder body (2) internally defining a gas storage space (3) which can be closed by means of a closing valve, wherein said cylinder body (2) comprises:
- a tubular wall (5) delimiting said gas storage space (3),
- a bottom wall (6) connected to a lower end of the tubular wall (5) and delimiting the gas storage space (3) on a lower side (7) of the cylinder (1),
- an upper wall (8) connected to an upper end of the tubular wall (5) and delimiting the gas storage space (3) on an upper side (9) of the cylinder (1) opposite to the lower side (7),
- a supporting part (11) connected to the lower wall (6) and having one or more resting portions (12) protruding towards the lower side (7),
- a protection ring (13) manufactured separately and then mounted to the supporting part (11), said protection ring (13) having:
- an annular slot (14), which accommodates said one or more resting portions (12), and
- a resting surface (15) facing the lower side (7) and free from metal edges,
wherein the protection ring (13) has a circular shape and a "U-shaped" section profile with a base wall (19) which forms the resting surface (15) and two side walls (20, 21), **characterised in that** at least one of the side walls (20, 21) forms a corrugated inner surface (22) with grooves (23) alternating with ribs and extending from the bottom of the annular slot (14) to its opening.

2. A gas cylinder (1) according to claim 1, wherein the resting portion (12) is a substantially circular-cylindrical, tubular portion with an annular and planar lower surface (16) completely accommodated within the annular slot (14) of the protection ring (13).

3. A gas cylinder (1) according to claim 1 or 2, wherein the protective ring (13) is made of plastic, polymeric or elastomeric material.

4. A gas cylinder (1) according to claim 1 or 2, wherein:
- the protection ring (13) is made of metal, in particular stainless steel or aluminum, and forms rounded lower outer edges (16),
- the resting surface (15) is either smoothed or polished.

5. A gas cylinder (1) according to one of the preceding claims, wherein the protection ring (13) is press-fitted on the resting portion (12) by using the elasticity of the protection ring (13) as clamping force.

6. A gas cylinder (1) according to one of the preceding claims, wherein the protection ring (13) is locked on the resting portion (12) by means of auxiliary mechanical connection members (17) different from the protection ring (11) and from the resting portion (12).

7. A gas cylinder (1) according to one of the preceding claims, wherein the protection ring (13) is locked on the resting portion (12) by means of an adhesive.

8. A gas cylinder (1) according to one of the preceding claims, wherein the depth (T23) of the grooves (23) is less than 0.15*T13, where T13 is the total radial thickness (T13) of the protection ring (13).

9. A gas cylinder (1) according to any preceding claim, wherein the depth (T23) of the grooves (23) is from 0.125*T13 to 0.085*T13, where T13 is the total radial thickness (T13) of the protection ring (13).

10. A gas cylinder (1) according to any preceding claim, wherein the inner surface (22) forms at least three of said grooves (23) per circumferential length unit equal to the total radial thickness (T13) of the protection ring (13).

11. A gas cylinder (1) according to any preceding claim, wherein the grooves (23) extend parallel to the longitudinal axis (L).

12. A gas cylinder (1) according to one of the preceding claims, wherein the protection ring (13) forms a plurality of through openings (24) passing from the resting surface (15) to the slot (14).

13. A gas cylinder (1) according to claim 12, wherein the overall opening area of all the through openings (24) is smaller than one third, preferably smaller than one fourth, of the total area of the resting surface (15).

14. A gas cylinder (1) according to one of the preceding claims, wherein the protection ring (13) has a circular shape and a "U-shaped" section profile with a base wall (19) which forms the resting surface (15) and two side walls (20, 21), wherein the radial wall thickness of the resting portion (12) is greater than the thickness of the base wall (19) of the protection ring (13), and wherein the radial wall thickness of the resting portion (12) is greater than or equal to the single radial thicknesses of the two side walls (20, 21).

15. A gas cylinder (1) according to one of the preceding claims, comprising a handle (18) connected to the cylinder body (2) and arranged on the upper side (9) of the cylinder (1).

## Patentansprüche

1. Gaszylinder (1), umfassend einen Zylinderkörper (2), welcher intern einen Gas-Speicherraum (3) definiert, welcher mittels eines Schließventils geschlossen werden kann, wobei der Zylinderkörper (2) umfasst:
- eine rohrförmige Wand (5), welche den Gas-Speicherraum (3) begrenzt,
- eine Bodenwand (6), welche mit einem unteren Ende der rohrförmigen Wand (5) verbunden ist und den Gas-Speicherraum (3) an einer unteren Seite (7) des Zylinders (1) begrenzt,
- eine obere Wand (8), welche mit einem oberen Ende der rohrförmigen Wand (5) verbunden ist und den Gas-Speicherraum (3) an einer oberen Seite (9) des Zylinders (1) gegenüber der unteren Seite (7) begrenzt,
- einen Trageteil (11), welcher mit der unteren Wand (6) verbunden ist und einen oder mehrere Stützabschnitte (12) aufweist, welche in Richtung der unteren Seite (7) vorstehen,
- einen Schutzring (13), welcher separat hergestellt und dann an den Trageteil (11) montiert ist, wobei der Schutzring (13) aufweist:
- eine ringförmige Ausnehmung (14), welche den einen oder die mehreren Stützabschnitte (12) aufnimmt, und
- eine Stützfläche (15), welche zu der unteren Seite (7) weist und frei von Metallrändern ist,
wobei der Schutzring (13) eine Kreisform und ein "U-förmiges" Querschnittsprofil mit einer Basiswand (19), welche die Stützfläche (15) bildet, und zwei Seitenwänden (20, 21) aufweist,
**dadurch gekennzeichnet, dass** wenigstens eine der Seitenwände (20, 21) eine geriffelte innere Fläche (22) bildet, wobei sich Nuten (23) mit Rippen abwechseln, und sich erstreckend von dem Boden der ringförmigen Ausnehmung (14) zu ihrer Öffnung.

2. Gaszylinder (1) nach Anspruch 1, wobei der Stützabschnitt (12) ein im Wesentlichen kreiszylindrischer rohrförmiger Abschnitt mit einer ringförmigen und ebenen unteren Fläche (16) ist, vollständig innerhalb der ringförmigen Ausnehmung (14) des Schutzrings (13) aufgenommen.

3. Gaszylinder (1) nach Anspruch 1 oder 2, wobei der Schutzring (13) aus Kunststoff-, Polymer- oder Elastomermaterial hergestellt ist.

4. Gaszylinder (1) nach Anspruch 1 oder 2, wobei:
- der Schutzring (13) aus Metall hergestellt ist, insbesondere rostfreiem Stahl oder Aluminium, und abgerundete untere Ränder (16) bildet,
- die Stützfläche (15) entweder geglättet oder poliert ist.

5. Gaszylinder (1) nach einem der vorhergehenden Ansprüche, wobei der Schutzring (13) an den Stützabschnitt (12) durch Verwenden der Elastizität des Schutzrings (13) als Greifkraft pressgepasst ist.

6. Gaszylinder (1) nach einem der vorhergehenden Ansprüche, wobei der Schutzring (13) an dem Stützabschnitt (12) mittels mechanischen Hilfs-Verbindungselementen (17) festgesetzt ist, welche von dem Schutzring (11) und von dem Stützabschnitt (12) verschieden sind.

7. Gaszylinder (1) nach einem der vorhergehenden Ansprüche, wobei der Schutzring (13) an dem Stützabschnitt (12) mittels eines Haftmittels festgesetzt ist.

8. Gaszylinder (1) nach einem der vorhergehenden Ansprüche, wobei die Tiefe (T23) der Nuten (23) kleiner als 0,15*T13 ist, wobei T13 die totale radiale Dicke (T13) des Schutzrings (13) ist.

9. Gaszylinder (1) nach einem der vorhergehenden Ansprüche, wobei die Dicke (T23) der Nuten (23) von 0,125*T13 bis 0,085*T13 beträgt, wobei T13 die totale radiale Dicke (T13) des Schutzrings (13) ist.

10. Gaszylinder (1) nach einem der vorhergehenden Ansprüche, wobei die innere Fläche (22) wenigstens drei der Nuten (23) pro umfänglicher Längeneinheit bildet, gleich der totalen radialen Dicke (T13) des Schutzrings (13).

11. Gaszylinder (1) nach einem der vorhergehenden Ansprüche, wobei sich die Nuten (23) parallel zu der longitudinalen Achse (L) erstrecken.

12. Gaszylinder (1) nach einem der vorhergehenden Ansprüche, wobei der Schutzring (13) eine Mehrzahl von Durchgangsöffnungen (24) bildet, welche von der Stützfläche (15) zu der Ausnehmung (14) verlaufen.

13. Gaszylinder (1) nach Anspruch 12, wobei die Gesamt-Öffnungsfläche von allen der Durchgangsöffnungen (24) kleiner als ein Drittel, vorzugsweise kleiner als ein Viertel, der Gesamtfläche der Stützfläche (15) ist.

14. Gaszylinder (1) nach einem der vorhergehenden Ansprüche, wobei der Schutzring (13) eine Kreisform und ein "U-förmiges" Querschnittsprofil mit einer Basiswand (19), welche die Stützfläche (15) bildet, und zweite Seitenwänden (20, 21) aufweist,
wobei die radiale Wanddicke des Stützabschnitts (12) größer ist als die Dicke der Basiswand (19) des Schutzrings (13), und
wobei die radiale Wanddicke des Stützabschnitts (12) größer oder gleich der einfachen radialen Dicke der beiden Seitenwände (20, 21) ist.

15. Gaszylinder (1) nach einem der vorhergehenden Ansprüche, umfassend einen Griff (18), welcher mit dem Zylinderkörper (2) verbunden und an der oberen Seite (9) des Zylinders (1) angeordnet ist.

## Revendications

1. Bouteille de gaz (1) comprenant un corps de bouteille (2) définissant dans son intérieur un espace de stockage de gaz (3) qui peut être fermé au moyen d'une vanne de fermeture, dans laquelle ledit corps de bouteille (2) comprend :
- une paroi tubulaire (5) délimitant ledit espace de stockage de gaz (3),
- une paroi de fond (6) reliée à une extrémité inférieure de la paroi tubulaire (5) et délimitant l'espace de stockage de gaz (3) sur un côté inférieur (7) de la bouteille (1),
- une paroi supérieure (8) reliée à une extrémité supérieure de la paroi tubulaire (5) et délimitant l'espace de stockage de gaz (3) sur un côté supérieur (9) de la bouteille (1) à l'opposé du côté inférieur (7),
- une partie de support (11) reliée à la paroi inférieure (6) et ayant une ou plusieurs parties de pose (12) faisant saillie vers le côté inférieur (7),
- un anneau de protection (13) fabriqué séparément et monté par après sur la partie de support (11), ledit anneau de protection (13) ayant :
- une gorge annulaire (14), qui reçoit lesdites une ou plusieurs parties de pose (12), et
- une surface de pose (15) faisant face au côté inférieur (7) et exempte de bords métalliques,
dans laquelle l'anneau de protection (13) a une forme circulaire et un profil de section « en forme de U » avec une paroi de base (19) qui forme la surface de pose (15) et deux parois latérales (20, 21), **caractérisé en ce qu'**au moins une des parois latérales (20, 21) forme une surface interne striée (22) dotée de rainures (23) alternant avec des nervures et s'étendant depuis le fond de la gorge annulaire (14) jusqu'à son ouverture.

2. Bouteille de gaz (1) selon la revendication 1, dans laquelle la partie de pose (12) est une partie tubulaire sensiblement circulaire cylindrique avec une surface inférieure annulaire et plane (16) complètement logée dans la gorge annulaire (14) de l'anneau de protection (13).

3. Bouteille de gaz (1) selon la revendication 1 ou 2, dans laquelle l'anneau de protection (13) est réalisé en un matériau plastique, polymère ou élastomère.

4. Bouteille de gaz (1) selon la revendication 1 ou 2, dans laquelle :
- l'anneau de protection (13) est réalisé en métal, en particulier en acier inoxydable ou en aluminium, et forme des bords inférieurs extérieurs arrondis (16),
- la surface de pose (15) est lissée ou polie.

5. Bouteille de gaz (1) selon l'une des revendications précédentes, dans laquelle l'anneau de protection (13) est monté à force sur la partie de pose (12) en utilisant l'élasticité de l'anneau de protection (13) comme force de serrage.

6. Bouteille de gaz (1) selon l'une des revendications précédentes, dans laquelle l'anneau de protection (13) est verrouillé sur la partie de pose (12) au moyen d'éléments de connexion mécanique auxiliaires (17) différents de l'anneau de protection (11) et de la partie de pose (12).

7. Bouteille de gaz (1) selon l'une des revendications précédentes, dans laquelle l'anneau de protection (13) est verrouillé sur la partie de pose (12) au moyen d'un adhésif.

8. Bouteille de gaz (1) selon l'une des revendications précédentes, dans laquelle la profondeur (T23) des rainures (23) est inférieure à 0,15*T13, où T13 est l'épaisseur radiale totale (T13) de l'anneau de protection (13).

9. Bouteille de gaz (1) selon une quelconque revendication précédente, dans laquelle la profondeur (T23) des rainures (23) se situe entre 0,125*T13 et 0,085*T13, où T13 est l'épaisseur radiale totale (T13) de l'anneau de protection (13).

10. Bouteille de gaz (1) selon une quelconque revendication précédente, dans laquelle la surface intérieure (22) forme au moins trois desdites rainures (23) par unité de longueur circonférentielle égale à l'épaisseur radiale totale (T13) de l'anneau de protection (13).

11. Bouteille de gaz (1) selon une quelconque revendication précédente, dans laquelle les rainures (23) s'étendent parallèlement à l'axe longitudinal (L).

12. Bouteille de gaz (1) selon l'une des revendications précédentes, dans laquelle l'anneau de protection (13) forme une pluralité d'ouvertures traversantes (24) allant de la surface de pose (15) à la gorge (14).

13. Bouteille de gaz (1) selon la revendication 12, dans laquelle l'aire totale d'ouverture de toutes les ouvertures traversantes (24) est inférieure à un tiers, de préférence inférieure à un quart, de l'aire totale de la surface de pose (15).

14. Bouteille de gaz (1) selon l'une des revendications précédentes, dans laquelle l'anneau de protection (13) a une forme circulaire et un profil de section « en forme de U » avec une paroi de base (19) qui forme la surface de pose (15) et deux parois latérales (20, 21),
dans laquelle l'épaisseur de paroi radiale de la partie de pose (12) est supérieure à l'épaisseur de la paroi de base (19) de l'anneau de protection (13), et
dans laquelle l'épaisseur de paroi radiale de la partie de pose (12) est supérieure ou égale aux épaisseurs radiales individuelles des deux parois latérales (20, 21).

15. Bouteille de gaz (1) selon l'une des revendications précédentes, comprenant une poignée (18) reliée au corps de bouteille (2) et agencée sur le côté supérieur (9) de la bouteille (1).
